# EUROPÄISCHE PATENTSCHRIFT

(11) **EP 1 085 735 B1**
(45) Veröffentlichungstag und Bekanntmachung des Hinweises auf die Patenterteilung: **07.07.2004**
(21) Anmeldenummer: 00119855.5
(22) Anmeldetag: 12.09.2000
(51) Int. Cl.: H04M 7/00, H04Q 7/26, H04Q 7/30

(54) **Anordnung zur Informationsübermittlung zwischen zwei Kommunikationseinrichtungen**
Arrangement for information transmittal between two communication devices
Agencement pour l'envoi d'informations entre deux dispositifs de transmission

(30) Priorität: 13.09.1999 DE 19943778; 17.07.2000 DE 10034686
(43) Veröffentlichungstag der Anmeldung: 21.03.2001
(73) Patentinhaber: SIEMENS AKTIENGESELLSCHAFT, 80333 München (DE)
(72) Erfinder: Sablewski, Uwe, 33335 Gütersloh (DE); Schönfeld, Norbert, 44145 Dortmund (DE); Wulf, Frank, 41468 Neuss (DE)

(56) Entgegenhaltungen:
- WO-A-99/05830

## Beschreibung

Die vorliegende Erfindung betrifft eine Anordnung zur Informationsübermittlung zwischen zwei Kommunikationseinrichtungen, insbesondere zwischen einer Basisstation und einer Kommunikationsanlage, gemäß dem Oberbegriff des Patentanspruchs 1.

Bei modernen Kommunikationssystemen werden Endgeräte, die unterschiedliche Funktionen, wie z.B. Übertragen von Sprach-, Video-, Fax-, Multimedia-, Informations-, Text-, Programmund/oder Meßdaten realisieren, in zunehmendem Maße drahtlos an das Kommunikationssystem angekoppelt. Eine Verbindung zu derartigen mobilen Endgeräten wird dabei über an ein Kommunikationsnetz angekoppelte, sogenannte Basisstationen erstellt, die über eine Luftschnittstelle mit den mobilen Endgeräten in Verbindung treten können. Unter mobilen Endgeräten werden im folgen auch sogenannte schnurlose Endgeräte verstanden.

Ein definierter geographischer Bereich um eine Basisstation in dem eine drahtlose Verbindung vorgegebener Qualität zwischen einem mobilen Endgerät und einer Basisstation herstellbar ist, wird in der Literatur häufig als Funkzelle dieser Basisstation bezeichnet. Um einen größeren geographischen Bereich mit Verbindungsmöglichkeiten zu versorgen, sind in der Regel mehrere Basisstationen so über den zu versorgenden geographischen Bereich verteilt, daß ihre Funkzellen ein flächendeckenden Funknetz bilden. Ein in einem solchen Funknetz registriertes mobiles Endgerät kann dabei zwischen den jeweils in Funkreichweite befindlichen Basisstationen dieses Funknetzes beliebig wechseln. Das "Weiterreichen" eines mobilen Endgerätes von einer ersten Basisstation zu einer zweiten Basisstation bei bestehender Verbindung wird in der Literatur häufig als "handover" bezeichnet.

Eine Anbindung der Basisstationen an eine Kommunikationsanlage bzw. Vermittlungsstelle des Kommunikationsnetz erfolgt dabei in der Regel jeweils über eine Festverbindung. Beispielsweise ist aus der internationalen Offenlegungsschrift mit dem amtlichen Kennzeichen WO 96/38990 ein mobiles Kommunikationssystem bekannt, bei dem eine Anbindung von Basisstationen an eine Vermittlungsstelle über eine S₀-Schnittstelle gemäß dem ISDN-Standard erfolgt. Hierbei stehen für eine Datenübertragung zwischen der Vermittlungsstelle und einer Basisstation zwei Nutzdatenkanäle - sogenannte B-Kanäle mit einer jeweiligen Übertragungsrate von 64 kBit/s - und ein Signalisierungskanal - ein sogenannter D-Kanal mit einer Übertragungsrate von 16 kBit/s - zur Verfügung.

Ein Nachteil der vorgeschlagenen Lösung besteht unter anderem darin, daß für eine Übertragung von Informationen - Nutzdaten und Signalisierungsdaten - zwischen der Vermittlungsstelle und einer Basisstation nur eine eingeschränkte Übertragungskapazität zur Verfügung steht. Für eine Erhöhung der Übertragungskapazität bzw. für eine Anschaltung von zusätzlichen Basisstationen müssen weitere S₀-Schnittstellen der Vermittlungsstelle zur Verfügung gestellt werden, so daß zusätzliche Anschlußressourcen der Vermittlungsstelle belegt werden.

Ein weiterer Nachteil besteht darin, daß durch eine S₀-Schnittstelle nur eine begrenzte Übertragungsstrecke zwischen der Vermittlungsstelle und einer Basisstation zur Verfügung steht, so daß die Basisstation in der räumlichen Umgebung der Vermittlungsstelle angeordnet werden muß.

Um eine breitbandigere Anbindung einer Basisstation an eine zentrale Kommunikationseinrichtung realisieren zu können, ist es bereits bekannt, die Basisstation über das Internet mit der zentralen Kommunikationseinrichtung zu verbinden. Eine derartige Anordnung ist beispielsweise aus der internationalen Offenlegungsschrift WO 99/05830 bekannt. Hierbei erfolgt die Anbindung der Basisstation an das Internet mittels einer sogenannten "enhanced interworking function".

Des weiteren wurde bereits in der deutschen Patentanmeldung mit dem amtlichen Kennzeichen 199 437 78.5 vorgeschlagen, eine für ein "handover" von mobilen Endgeräten notwendige Synchronisierung der Basisstationen untereinander über ein lokales Netzwerk - in der Literatur häufig mit LAN (Local Area Network) abgekürzt - zu realisieren. Das lokale Netzwerk kann dabei auf vielfältige Weise, z.B. als "Ethernet", "Token Ring", "Token Bus" oder "FDDI" realisiert werden.

Der vorliegenden Erfindung liegt die Aufgabe zugrunde, eine Anordnung anzugeben, durch welche eine komfortable Anbindung von Basisstationen an eine Kommunikationsanlage realisiert werden kann.

Gelöst wird die Aufgabe ausgehend von den Merkmalen des Oberbegriffs des Patentanspruchs 1 durch dessen kennzeichnende Merkmale.

Ein wesentlicher Vorteil der erfindungsgemäßen Anordnung besteht darin, dass durch ein Vorsehen einer separaten Signalisierungseinheit in der Umsetzungseinheit kommunikationsanlagen-spezifische Leistungsmerkmale an einer abgesetzten, d.h. über ein Rechnernetz mit der Kommunikationsanlage verbundenen Basisstation zur Verfügung gestellt werden können.

Ein weiterer Vorteil der erfindungsgemäßen Anordnung besteht darin, daß durch eine Nutzung einer bereits bestehenden Netzinfrastruktur - eines lokalen Netzwerks LAN oder eines 'Intranets' bzw. des 'Internets' - ohne großen Aufwand auch von der Kommunikationsanlage weiter entfernte Gebiete - z.B. ein größeres Firmengelände oder sogar unterschiedliche Standorte - mit einem flächendeckendes Funknetz versorgt werden können.

Vorteilhafte Weiterbildungen der Erfindung sind in den Unteransprüchen angegeben.

Ein Vorteil von in den Unteransprüchen definierten Ausgestaltungen der Erfindung besteht unter anderem darin, daß durch eine Verwendung von standardisierten Übertragungsprotokollen - wie z.B. dem H.323-Protokoll - für eine Informationsübermittlung über das Rechnernetz eine gesicherte Informationsübertragung gewährleistet werden kann.

Ein Ausführungsbeispiel der Erfindung wird im folgenden anhand der Zeichnung näher erläutert.

Dabei zeigen:
- Fig. 1:: ein Strukturbild zur schematischen Darstellung eines erfindungsgemäßen Kommunikationssystems;
- Fig. 2:: ein Strukturbild zur schematischen Darstellung der wesentlichen Funktionseinheiten einer erfindungsgemäßen Interworking Unit; und
- Fig. 3:: ein Strukturbild zur schematischen Darstellung der wesentlichen Funktionseinheiten einer in der Interworking Unit angeordneten Umsetzungseinheit.

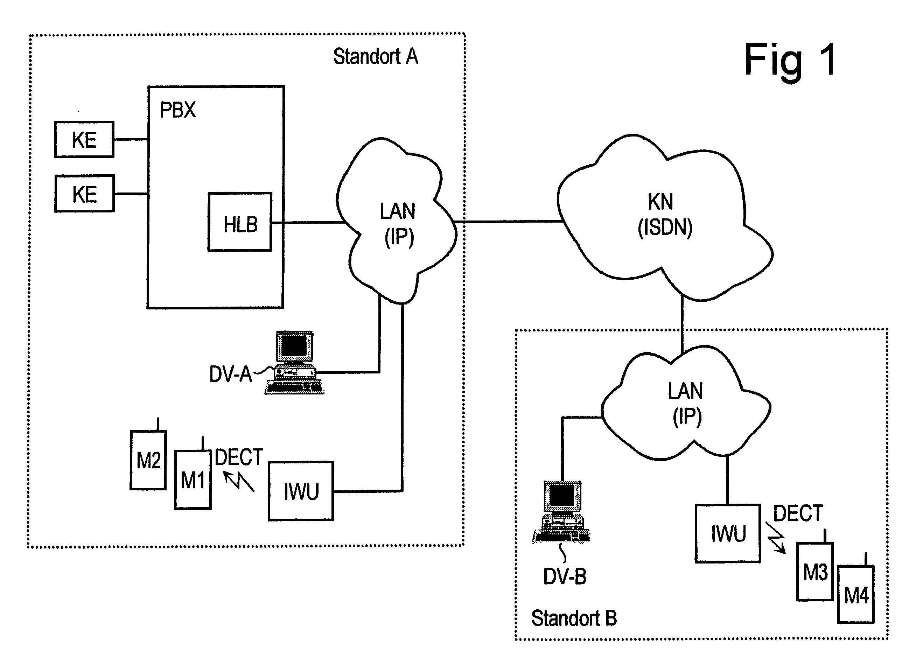

Fig. 1 zeigt ein Strukturbild zur schematischen Darstellung eines erfindungsgemäßen - insbesondere privaten - Kommunikationssystems. Das Kommunikationssystem umfaßt zwei Standorte A und B die über ein Kommunikationsnetz - beispielsweise ein ISDN-orientiertes Kommunikationsnetz - miteinander verbunden sind.

Der erste Standort A weist dabei eine Kommunikationsanlage PBX zum Anschluß von schnurgebundenen Kommunikationsendgeräten KE auf. Zusätzlich zu - nicht dargestellten - Anschlußeinheiten zum Anschließen der schnurgebundenen Kommunikationsendgeräte KE weist die Kommunikationsanlage PBX eine Netzanschlußeinheit HLB zum Verbinden eines lokalen Rechnernetzes LAN mit der Kommunikationsanlage PBX auf. Das lokale Rechnernetz LAN kann dabei auf vielfältige Weise, z.B. als "Ethernet", "Token Ring", "Token Bus" oder "FDDI" realisiert sein. Eine Datenübermittlung über das lokale Netzwerk LAN erfolgt gemäß dem bekannten IP-Protokoll (durch das in Klammern gesetzte IP - kurz für Internet Protokoll - veranschaulicht).

An das lokale Rechnernetz LAN des ersten Standortes A ist beispielhaft eine Datenverarbeitungseinrichtung DV-A - beispielsweise ein 'Personal Computer' oder eine 'Workstation' angeschlossen. Auf der Datenverarbeitungseinrichtung DV-A ist eine - nicht dargestellte - Telefonapplikation implementiert. Durch eine derartige Telefonapplikation stehen einem Benutzer der Datenverarbeitungseinrichtung DV-A Funktionsmerkmale - häufig auch als 'Features' bezeichnet - eines herkömmlichen Telefons zur Verfügung. In der Literatur wird eine derartige Applikation deshalb häufig auch als virtuelles Telefon bezeichnet. Die Verwendung einer derartigen Telefonapplikation setzt jedoch die Ausgestaltung der Datenverarbeitungseinrichtungen DV-A mit einer sogenannten 'Soundkarte' zum Anschluß geeigneter Sprach-Eingabemittel - z.B. eines Mikrofons - und Sprach-Ausgabemittel - z.B. eines Lautsprechers - an die Datenverarbeitungseinrichtung DV-A voraus.

Des weiteren ist an das Rechnernetz LAN des ersten Standorts A eine erfindungsgemäße Interworking Unit IWU angeschlossen, über die mobile Kommunikationsendgeräte M1, M2 mit dem Kommunikationssystem verbindbar sind. Eine Verbindung der Interworking Unit IWU mit den mobilen Kommunikationsendgeräten M1, M2 erfolgt dabei im vorliegenden Ausführungsbeispiel gemäß dem bekannten DECT-Standard (Digital European Cordless Telephone).

Analog zum ersten Standort A umfaßt der zweite Standort B ebenfalls ein lokales Netzwerk LAN, an das eine Datenverarbeitungseinrichtung DV-B mit einer implementierten - nicht dargestellten - Telefonapplikation und eine weitere Interworking Unit IWU angeschlossen sind. Über die Interworking Unit IWU sind weitere mobile Kommunikationsendgeräte M3, M4 mit dem Kommunikationssystem verbindbar

Im folgenden wird der Aufbau der Interworking Units IWU näher beschrieben:

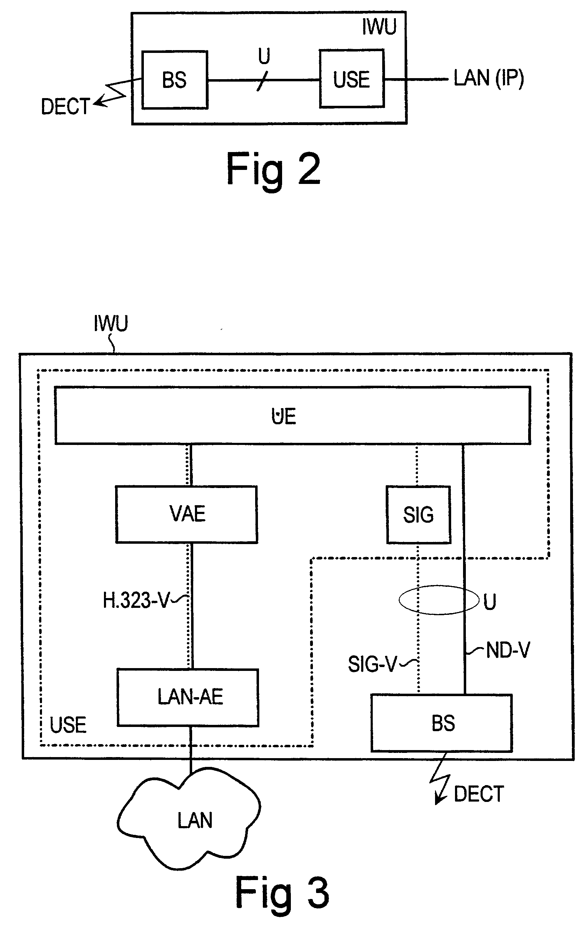

Fig. 2 zeigt ein Strukturbild zur schematischen Darstellung der wesentlichen Funktionseinheiten einer erfindungsgemäßen Interworking Unit IWU. Die Interworking Unit IWU umfaßt als zentrale Einheit eine herkömmliche Basisstation BS. Die Basisstation weist dabei eine DECT-Luftschnittstelle zur Verbindung mit den mobilen Kommunikationsendgeräten M1,...,M4 und eine Festnetz-Schnittstelle U für eine Verbindung mit einer Umsetzungseinheit USE auf. Die U-Schnittstelle umfaßt in der Regel zum einen 2 Nutzdatenkanäle, welche als ISDN-orientierte B-Kanäle mit einer Übertragungsbitrate von jeweils 64 kBit/s ausgestaltet sind und zum anderen einen Signalisierungskanal, welcher als ISDN-orientierter D-Kanal mit einer Übertragungsbitrate von 16 kBit/s ausgestaltet ist. Im vorliegenden Ausführungsbeispiel werden die beiden Nutzdatenkanäle derart aufgespalten, daß für eine Datenübertragung zwischen der Basisstation BS und der Umsetzungseinheit USE 4 Nutzdatenkanäle mit einer Übertragungsbitrate von jeweils 32 kBit/s zur Verfügung stehen. Durch die Umsetzungseinheit USE erfolgt dabei eine bidirektionale Anpassung zwischen der U-Schnittstelle und dem für eine Datenübertragung über das lokale Netzwerk LAN eingerichteten Übertragungsprotokoll. Eine Übertragung von Sprachdaten und den Sprachdaten zugeordneten Signalisierungsinformationen über das lokale Netzwerk LAN kann dabei beispielsweise gemäß dem auf dem IP-Protokoll basierenden Übertragungsprotokoll H.323 erfolgen.

Alternativ zur U-Schnittstelle kann eine Kopplung der Basisstation BS und der Umsetzungseinrichtung USE auch über eine andere beliebige Kommunikationsschnittstelle, beispielsweise eine S₀-Schnittstelle, erfolgen. Dies setzt allerdings voraus, daß die Umsetzungseinrichtung USE für eine Anpassung der unterschiedlichen Übertragungsprotokolle - beispielsweise zwischen dem S₀- und dem IP-Protokoll - entsprechend ausgestaltet ist.

Fig. 3 zeigt nun ein Strukturbild zur schematischen Darstellung der wesentlichen Funktionseinheiten der Umsetzungseinheit USE (in der Figur durch die Strich-Punkt-Linie gegenüber der Interworking Unit IWU abgegrenzt). Die Umsetzungseinheit USE weist eine eine - nicht dargestellte - Schnittstelle für den Anschluß des lokalen Netzwerks LAN an die Interworking Unit IWU bereitstellende LAN-Anschlußeinheit LAN-AE auf. Die LAN-Anschlußeinheit LAN-AE ist mit einer Verbindungsaufbaueinheit VAE verbunden, durch welche eine Steuerung eines Verbindungsaufbaus zwischen der Interworking Unit IWU und einer weiteren - beispielsweise an das lokale Netzwerk LAN oder an die Kommunikationsanlage PBX angeschlossene - Kommunikationseinrichtung erfolgt. Beispielsweise wird durch die Verbindungsaufbaueinheit VAE der Verbindungsaufbau einer H.323-Verbindung H.323-V für eine Übertragung von Sprachdaten und den Sprachdaten zugeordneten Signalisierungsinformationen über das lokale Netzwerk LAN gesteuert.

Die Verbindungsaufbaueinheit VAE ist wiederum mit einer Umwandlungseinheit UE verbunden, durch welche eine bidirektionale Umwandlung zwischen dem durch das lokale Netzwerk LAN unterstützten Übertragungsprotokoll und dem durch die Festnetz-Schnittstelle U der Basisstation BS unterstützten Übertragungsprotokoll erfolgt. Im vorliegenden Ausführungsbeispiel erfolgt durch die Umwandlungseinheit UE somit eine bidirektionale Umwandlung zwischen dem U-Protokoll und dem H.323-Protokoll. Die Umwandlungseinheit UE ist wiederum über eine Nutzdatenverbindung ND-V - entspricht den B-Kanälen der U-Schnittstelle - und über eine Signalisierungsverbindung SIG-V - entspricht dem D-Kanal der U-Schnittstelle - unter Zwischenschaltung einer Signalisierungseinheit SIG mit der Basisstation BS verbunden. Durch die Umwandlungseinheit UE erfolgt somit eine Abbildung der Nutzdatenverbindung ND-V und der Signalisierungsverbindung SIG-V auf die H.323-Verbindung und umgekehrt.

Die Signalisierungseinheit SIG dient einer Realisierung von Leistungsmerkmalen durch die Basisstation BS bei einer Verbindung der Interworking Unit IWU mit der Kommunikationsanlage PBX, da im Vergleich zu den durch eine private Kommunikationsanlage PBX zur Verfügung gestellten Leistungsmerkmalen gemäß dem H.323-Protokoll nur Signalisierungsmeldungen für eine begrenzte Anzahl von Leistungsmerkmalen definiert sind.

Durch die Signalisierungseinheit SIG erfolgt dabei eine Umsetzung von Signalisierungsmeldungen zur Realisierung von kommunikationsanlagen-spezifischen Leistungsmerkmalen - wie beispielsweise Anklopfen oder Makeln - auf basisstations-spezifische Signalisierungsmeldungen und umgekehrt. Hierbei werden kommunikationsanlagen-spezifischen Signalisierungsmeldungen beispielsweise getunnelt über die H.323-Verbindung von der Kommunikationsanlage PBX an die Interworking Unit IWU übermittelt, in der die kommunikationsanlagen-spezifischen Signalisierungsmeldungen in der Signalisierungseinheit SIG in basisstations-spezifische Signalisierungsmeldungen umgewandelt und über die Signalisierungsverbindung SIG-V an die Basisstation BS übermittelt werden.

Bei einer Verbindung der Interworking Unit IWU mit einer anderen am lokalen Netzwerk LAN des ersten oder des zweiten Standorts A, B angeschlossenen Kommunikationseinrichtung, beispielsweise einer Datenverarbeitungseinrichtung DV-A, DV-B oder einem - nicht dargestellten - IP-Telefon, wird die Signalisierungseinheit SIG überbrückt, da bei einer derartigen Verbindung nur die gemäß dem H.323-Protokoll definierten Leistungsmerkmale realisierbar sind.

Durch die Kopplung einer Basisstation BS an ein lokales Netzwerk LAN, d.h. durch die Nutzung einer bereits bestehenden Netzinfrastruktur können ohne großen Aufwand auch von der Kommunikationsanlage PBX weiter entfernte Gebiete - z.B. ein größeres Firmengelände oder sogar unterschiedliche Standorte - mit einem flächendeckendes Funknetz versorgt werden.

## Patentansprüche

1. Anordnung zur Informationsübermittlung zwischen einer Basisstation (BS) und einer Kommunikationsanlage (PBX),
bei der die Kommunikationsanlage (PBX) und die Basisstation (BS) über ein Rechnernetz (LAN) miteinander verbindbar sind, bei der die Basisstation (BS) über eine Umsetzungseinheit (USE) mit dem Rechnernetz (LAN) verbunden ist, wobei durch die Umsetzungseinheit (USE) eine Umsetzung des Übertragungsprotokolls einer von der Basisstation (BS) zur Verfügung gestellten Festnetz-Schnittstelle (U) auf das Übertragungsprotokoll (IP) des Rechnernetzes (LAN) realisiert wird, und
**dadurch gekennzeichnet,**
**dass** die Umsetzungseinheit (USE) eine Signalisierungseinheit (SIG) für eine Umsetzung zwischen einer über das Rechnernetz (LAN) empfangenen bzw. zu sendenden Kommunikationsanlagenspezifischen Signalisierung und einer Basisstations-spezifischen Signalisierung aufweist.

2. Anordnung nach Anspruch 1,
**dadurch gekennzeichnet,**
**daß** die Basisstation (BS) eine DECT-Luftschnittstelle (Digital European Cordless Telephone) für eine Verbindung mit mobilen Kommunikationsendgeräten (M) aufweist.

3. Anordnung nach einem der vorhergehenden Ansprüche,,
**dadurch gekennzeichnet,**
**daß** die Signalisierungseinheit (SIG) für eine Übertragung und ein Empfangen von kommunikationsanlagen-spezifischen Signalisierungsinformationen über das Rechnernetz (LAN) ausgestaltet ist.

4. Anordnung nach einem der vorhergehenden Ansprüche,
**dadurch gekennzeichnet,**
**daß** für die Informationsübermittlung über das Rechnernetz
(LAN) das H.323-Protokoll eingerichtet ist.

## Claims

1. Arrangement for sending information between a base station (BS) and a communication system (PBX), in which the communication system (PBX) and the base station (BS) can be interconnected by way of a computer network (LAN), whereby the base station (BS) is connected by way of a conversion unit (USE) to the computer network (LAN), whereby a conversion of the transmission protocol of a fixed-network interface (U) made available by the base station (BS) to the transmission protocol (IP) of the computer network (LAN) is implemented by the conversion unit (USE), and
**characterized in that**
the conversion unit (USE) has a signaling unit (SIG) for performing the conversion between the communication system specific signaling received or to be sent over the computer network (LAN) and a base station specific signaling.

2. Arrangement according to Claim 1,
**characterized in that**
the base station (BS) has a DECT air interface (Digital European Cordless Telephone) for connecting with mobile communication terminal devices (M).

3. Arrangement according to one of the preceding claims,
**characterized in that**
the signaling unit (SIG) is designed for transmitting and receiving communication system specific signaling information by way of the computer network (LAN).

4. Arrangement according to one of the preceding claims,
**characterized in that**
the H.323 protocol is set up for sending information over the computer network (LAN).

## Revendications

1. Agencement pour la transmission d'informations entre une station de base (BS) et un système de communication (PBX), dans lequel l'installation de communication (PBX) et la station de base (BS) sont reliables entre eux par l'intermédiaire d'un réseau informatique (LAN), dans lequel la station de base (BS) est reliée au réseau informatique (LAN) par une unité de conversion (USE), l'unité de conversion (USE) procédant à une conversion du protocole de transmission d'une interface de réseau fixe (U) mise à disposition par la station de base (BS) en protocole de transmission (IP) du réseau informatique (LAN) et
**caractérisé en ce que**
l'unité de conversion (USE) est munie d'une unité de signalisation (SIG) pour une conversion d'une signalisation spécifique aux systèmes de communication réceptionnée ou devant être envoyée par l'intermédiaire du réseau informatique (LAN) en une signalisation spécifique à la station de base.

2. Agencement selon la revendication 1,
**caractérisé en ce que**
la station de base (BS) est munie d'une interface radio DECT (Digital European Cordless Telephone), pour une liaison avec des terminaux de communication mobiles (M).

3. Agencement selon l'une quelconque des revendications précédentes,
**caractérisé en ce que**
l'unité de signalisation (SIG) est conçue pour une transmission et une réception d'informations de signalisation spécifiques aux systèmes de communication, par l'intermédiaire du réseau informatique (LAN).

4. Agencement selon l'une quelconque des revendications précédentes,
**caractérisé en ce que**
le protocole H.323 est installé pour la transmission d'informations par l'intermédiaire du réseau informatique (LAN).
